# EUROPÄISCHE PATENTSCHRIFT

(11) **EP 1 037 022 B1**
(45) Veröffentlichungstag und Bekanntmachung des Hinweises auf die Patenterteilung: **19.02.2003**
(21) Anmeldenummer: 00103672.2
(22) Anmeldetag: 22.02.2000
(51) Int. Cl.: G01F 1/66, A61B 5/087, G01N 29/02

(54) **Verfahren zur Bestimmung der Strömungsgeschwindigkeit oder der Molmasse von Flüssigkeiten**
Device to determine flow speed or molecular weight of fluids
Dispositif pour déterminer la vitesse ou le poids moleculaire des fluides

(30) Priorität: 16.03.1999 DE 19911762
(43) Veröffentlichungstag der Anmeldung: 20.09.2000
(73) Patentinhaber: Ganshorn, Peter, 97702 Münnerstadt (DE)
(72) Erfinder: Ganshorn, Peter, 97702 Münnerstadt (DE)
(74) Vertreter: Pöhner, Wilfried Anton, Dr.

(56) Entgegenhaltungen:
- DE-A- 4 318 690
- US-A- 4 910 717

## Beschreibung

Die Erfindung bezieht sich auf ein Verfahren zur Bestimmung der Strömungsgeschwindigkeit und/oder der Molmasse von flüssigen oder gasförmigen Medien in Durchflußmeßgeräten, insbesondere Pneumotachographen, mit Hilfe der Laufzeitmessung von Ultraschallimpulsen im Medium zwischen zwei Ultraschall-sendern/Empfängern, insbesondere piezoelektrischen Sendern/Empfängern, sowie ein Durchflußmeßgerät zur Durchführung des Verfahrens.

Die Bestimmung der Strömungsgeschwindigkeit und der Molmasse gasförmiger Medien ist in der Industrie ebenso wie in der Medizin, z. B. bei der Erfassung verschiedener Lungenfunktionsparameter wie Atemvolumen oder Gasaustausch in der Lunge von Interesse. Hierzu sind Meßgeräte, die mit unterschiedlichen physikalischen Prinzipien arbeiten, bekannt. Beim Ultraschallaufzeitverfahren wird die Änderung der Ausbreitungsgeschwindigkeit von Schallwellen relativ zum bewegten Medium zur Bestimmung der Strömungsgeschwindigkeit und/oder der Molmasse verwendet. Dabei wird ein Ultraschallimpuls im wesentlichen in Bewegungsrichtung durch das Medium gesandt, dessen Laufzeit auf der definierten Strecke zwischen Sender und Empfänger gemessen, und der Vorgang unmittelbar danach in umgekehrter Richtung wiederholt. Dabei wird die Ausbreitungsgeschwindigkeit des Impulses durch die Strömung des Mediums erhöht bzw. erniedrigt, und aus den unterschiedlichen Werten lassen sich die Strömungsgeschwindigkeit bzw. die Molmasse ermitteln. Das Verfahren kann auch bei flüssigen Medien angewandt werden. Die physikalischen Grundlagen sowie die Formeln zur Berechung der gewünschten Werte sind den Artikeln "Technologie der Ultraschall-Spirometrie" von C. Buess, W. Guggenbühl und K. Harnoncourt in der Zeitschrift "Atemwegs- und Lungenkrankheiten", Jahrgang 21, Nr. 9/1995, S. 438-442, sowie "Die Molmasse der Atemluft" von T. Kenner und K. Harnoncourt, ebenda, S. 454-456 mit den dort angegebenen Literaturangaben zu entnehmen. In der Medizintechnik sind Pneumotachographen, die auf diesem Meß-prinzip beruhen, bekannt und gebräuchlich, wobei entweder direkt die Zeit zwischen Ausstrahlung und Empfang elektronisch gemessen, d. h. mit einem getakteten Zähler abgezählt wird, oder, falls ein Sender kontinuierlich Ultraschallwellen aussendet, die Phasenverschiebung im Empfänger bestimmt wird. Die hierzu erforderlichen Maßnahmen sind dem Fachmann bekannt. Übliche Pneumotachographen verfügen über Durchflußrohre von 2-3 cm Durchmesser, so daß die Sender/Empfänger einen gegenseitigen Abstand von ca. 5 cm haben, und sich daraus Laufzeiten von ungefähr 150 Mikrosekunden ergeben. Die bei normaler Atmung auftretende Strömungsgeschwindigkeit von 1 m/s ergibt eine Änderung der Laufzeit in der Größenordnung von einer Mikrosekunde, wie es mit den oben angeführten Formeln errechenbar ist. Auch die Zusammensetzung ausgeatmeter Luft, die ca. 5 Vol.% CO₂ im Gegensatz zur Eingeatmeten enthält, ändert die Laufzeit in dieser Größenordnung. Als Ultraschallsender/Empfänger kommen bevorzugterweise piezoelektrische Schwingquarze mit einer Resonanzfrequenz von mehreren 100 kHz zur Anwendung, wie es dem Stand der Technik entnehmbar ist. Sie bieten den Vorteil einer hohen Frequenzstabilität, sowie einer kurzen Einschwingzeit, so daß der zeitliche Abstand zwischen Empfang und Aussenden eines Impulses durch einen Schwingquarz sehr kurz ist, und sich in dieser Zeit die Strömungsverhältnisse im Durchflußrohr kaum ändern und das Meßergebnis verfälschen. Bei der gleichzeitigen Ausstrahlung von Impulsen von beiden Sendern würden die Messungen durch Überlagerungen von reflektierten Schallwellen verfälscht.

Ein Nachteil bisher bekannter Verfahren zur Bestimmung der Laufzeit besteht in der Art der Laufzeitmessung. Wie oben ausgeführt wird sie nur um wenige Mikrosekunden verändert, so daß die eigentliche Messung nur in einem kurzen Zeitabschnitt um den Wert der Laufzeit im ruhenden Medium relevant ist. Um eine Mikrosekunde mit hinreichender Genauigkeit auflösen zu können, sollte sie in mindestens 1.000 Zeitintervalle unterteilt werden, also eine Messung im Nanosekundenbereich erfolgen. Die verwendeten getakteten Zähler zur Auszählung der Zeit zwischen Aussendung und Empfang des Signals arbeiten mit Frequenzen im GHz-Bereich. Da aber die gesamte Laufzeit ausgezählt wird, ergibt auch ein relativer Fehler von z. B. nur 1% bereits Verfälschungen, die in der Größenordnung der Laufzeitänderung liegen. Eine genauere Zeitauflösung, d. h. ein noch schnellerer Zähler, ist zudem kaum realisierbar.

Der Erfindung liegt das Problem zugrunde, die Laufzeit eines Ultraschallimpulses in einem bewegten Medium mit hinreichender Genauigkeit zu messen.

Dieses Problem wird erfindungsgemäß durch die Merkmale der Ansprüche 1 und 6 gelöst. Ein Verfahren wird vorgeschlagen, wonach ein Ultraschallimpuls von einem Sender abgestrahlt wird, und gleichzeitig der Ablauf einer Zeitspanne, die geringfügig kürzer ist als die Laufzeit im ruhenden Medium, beginnt, nach dem Ende der Zeitspanne die Entladung eines Kondensators, an den eine Spannung angelegt ist, mit konstanter Stromstärke beginnt, mit der Registrierung des Ultraschallimpulses im Empfänger die Entladung beendet wird, die noch am Kondensator anliegende Spannung gemessen und daraus die Entladedauer bestimmt wird, die Laufzeit aus Zeitspanne und Entladedauer addiert wird, die Laufzeitmessung in umgekehrter Richtung wiederholt wird, aus den unterschiedlichen Laufzeiten die Strömungsgeschwindigkeit und/oder die Molmasse bestimmt wird.

Der Kerngedanke der Erfindung besteht darin, daß die eigentliche Zeitmessung erst kurz vor dem vermuteten Eintreffen des Ultraschallimpulses im Empfänger beginnt, und die in einem Kondensator gespeicherte Ladung zur Zeitmessung verwendet wird. Wie oben ausgeführt, unterliegt die Laufzeit nur geringfügigen Änderungen, so daß mit der eigentlichen Messung erst kurz vor Ende der bekannten Laufzeit im ruhenden Medium begonnen werden muß. Sie kann mit einem Blindversuch, d. h. ohne Strömung, bestimmt, und danach eine geringfügig kürzere Zeitspanne, z. B. 148 statt 150 Mikrosekunden bei einer Laufzeitänderung von ca. 1 Mikrosekunde, als sog. Totzeit eingestellt werden, nach deren Ablauf die Entladung eines Kondensators begonnen wird. Er ist, durch das Anlegen einer Spannung, mit einer bekannten Ladungsmenge aufgeladen. Es ist dem Fachmann möglich, ihn mit einer konstanten Stromstärke zu entladen, so daß die im Kondensator gespeicherte Ladung und damit die elektrische Spannung kontinuierlich abnimmt. Mit Registrierung des Impulses im Empfänger wird dann der Entladevorgang beendet. Die am Kondensator anliegenden Spannung wird in die Entladedauer des Kondensators umgerechnet, nach der Formel t = (C x U) : : I, mit der Kondensatorkapazität C, der elektrischen Spannung U und dem konstanten Entladestrom I. Sie wird zu der Totzeit addiert und die Gesamtlaufzeit des Ultraschallimpulses vom Sender zum Empfänger erhalten. Nachdem der Vorgang unmittelbar anschließend in umgekehrter Richtung, d. h. der bisherige Empfänger fungiert als Sender und umgekehrt, wiederholt wurde, sind die Laufzeiten des Ultraschallimpulses mit der Bewegungsrichtung und entgegen der Bewegungsrichtung gemessen und mit den bekannten Formeln kann die Strömungsgeschwindigkeit und die Molmasse des Mediums berechnet werden. Die hierzu notwendigen Maßnahmen, d. h. die Kopplung eines Empfängers an einen Kondensator, sowie die Ermittlung der Entladezeit und die Addierung zur Totzeit und die Berechnung der gewünschten Meßergebnisse kann durch elektronische Schaltungen automatisch erfolgen, wie es dem geschulten Fachmann bekannt ist.

Der Vorteil der Erfindung besteht darin, daß die Messung elektrischer Größen, wie der am Kondensator anliegenden Spannung in mV, mit kostengünstigen Meßgeräten und geringen Meßfehlern durchführbar ist. Desweiteren können die analogen Ausgangssignale mit bekannten elektrischen Schaltungen, z. B. Operationsverstärkern, weiterverarbeitet werden, so daß die Auswertung der Meßergebnisse, d. h. die Summen- und Differenzbildung der Laufzeiten in einfacher Weise realisierbar ist. Außerdem ergibt sich durch die geringe Zeitdauer, in der gemesseen wird, eine Verringerung der absoluten Größe des relativen Meßfehlers, der bei jeder Messung auftritt, da ein Fehler von 1% bei einer Mikrosekunde das Ergebnis weniger verfälscht als bei den oben angeführten Meßmethoden. Dieses Verfahren ist in den unterschiedlichsten, auch industriellen oder gewerblichen, Bereichen anwendbar. Es ist z. B. möglich, damit die Ansauggeschwindigkeit von Luft in einem Verbrennungsmotor zu messen, oder den Durchfluß von Treibstoff in einer Leitung.

Vorteilhafte Ausgestaltungen des Verfahrens sind Gegenstand von Unteransprüchen.

Um das Verfahren an die verschiedensten gasförmigen oder flüssigen Medien anzupassen, besteht eine vorteilhafte Ausgestaltung darin, die Zeitspanne und/oder die am Kondensator anliegende Spannung und/oder den Entladestrom zu verändern. Da in unterschiedlichen Medien die Ultraschallimpulse verschiedene Schallgeschwindigkeiten aufweisen, wird die Zeitspanne, die vor Beginn der Messung abläuft, angeglichen. Mit einer Veränderung der am Kondensator anliegenden Spannung und des Entladestroms wird eine Anpassung an den erforderlichen Meßbereich erzielt. Wird beispielsweise die Kondensatorspannung erhöht, so kann, bei konstantem Entladestrom, eine größere Zeitdauer ausgemessen werden, wie es bei einer schnellen Strömung und einer damit verbundenen großen Änderung der Laufzeit notwendig ist. Ebenso ist es möglich, gleichzeitig den Entladestrom zu erhöhen, so daß der Abnahme z. B. um ein mV an Kondensatorspannung immer derselbe Zeitraum zugeordnet bleibt, um eine gleichbleibend hohe Auflösung des jeweiligen Meßbereichs zu erhalten.

Eine Vereinfachung des Verfahrens besteht darin, die Laufzeit eines Impulses im ruhenden Medium zu bestimmen, und die am Kondensator anliegende Spannung und/oder den Entladestrom so einzustellen, daß die Spannung 0V, die nach einer gewissen Entladedauer erreicht wird, der Laufzeit im ruhenden Medium zugeordnet ist, d. h. daß der Nulldurchgang der Kondensatorspannung, wenn eine positive Spannung angelegt wurde, dem Zeitpunkt entspricht, zu dem ein Impuls im ruhenden Medium im Empfänger registriert würde. Dabei ist der Meßbereich, d. h. die Spannung und die Entladestromstärke dem jeweiligen Medium mit seiner Strömungsgeschwindigkeit angepaßt. Der Vorteil besteht darin, daß bei einem linearen Ansatz, wie es weiter unten ausgeführt ist, die kleinen Änderungen der Laufzeit, bzw. die gemessene anliegende Spannung nach Entladungsende direkt mit Hilfe bekannter Schaltungen in die Änderung der Strömungsgeschwindigkeit bzw. der Molmasse umrechenbar ist, wobei die Laufzeiten jeweils um den gleichen kleinen Wert von der Zeit im ruhenden Medium abweichen.

In einer Vereinfachung der Berechnung der Strömungsgeschwindigkeit und/oder der Molmasse des Mediums wird angenommen, daß eine kleine Änderung der Strömungsgeschwindigkeit proportional ist zu einer proportional ist zu einer kleinen Änderung der Laufzeit, bzw. umgekehrt proportional der Molmassenänderung. Mit der Formel zur Berechnung Strömungsgeschwindigkeit sei diese Linearisierung beispielhaft dargestellt: sie enthält den Term(t₁ - t₂)/(t₁ ∗ t₂), mit den beiden unterschiedlichen Laufzeiten, die sich jeweils um den kleinen Betrag d von der Laufzeit t₀ im ruhenden Medium unterscheiden. Daraus folgt: ((t₀+d) - (t₀- d)) / (t₀² - d²) (2∗d) / t₀².
Da d² von zweiter Ordnung klein ist, ist es vernachlässigbar, wie eine Abschätzung der Größenordnungen ergibt: t₀ ist im Ausführungs-beispiel der Zeichnung 150 Mikrosekunden und d ungefähr eine Mikrosekunde, so daß sich ein relativer Fehler von 0,005% ergibt. Daraus folgt, daß die kleine Änderung der Strömungsgeschwindigkeit proportional zur kleinen Laufzeitänderung d ist. Diese Näherung gilt natürlich nur in einem begrenzten Bereich, der für jedes Medium und jede Strömungsgeschwindigkeit bzw. Molmasse zu bestimmen ist, d. h. so lange die Abweichung vom tatsächlichen Wert kleiner ist als der Meßfehler des Geräts. Der Vorteil der Linearisierung besteht darin, daß die am Kondensator gemessenen Spannungen in mV direkt in die Änderung der Strömungsgeschwindigkeit oder der Molmasse umrechenbar sind, was mit Hilfe bekannter Schaltungen leicht durchgeführt werden kann.

Ein mögliches Verfahren der Molmassenbestimmung besteht darin, daß sie im ruhenden Medium erfolgt. Dies hat zur Folge, daß die Laufzeiten der Ultraschallimpulse, die in entgegengesetzter Richtung durch das Medium geschickt werden, den gleichen Betrag haben. Dabei ist es erfindungsgemäß unerheblich, wie das Medium im Durchflußrohr in Ruhezustand, relativ zum Rohr, gebracht wird.

Der apparative Aufbau eines Durchflußmeßgeräts, das auf dem neuartigen Meßverfahren beruht, gleicht dem eines bekannten Durchflußmeßgeräts, wie es in der Medizin oder der Meßtechnik auf den verschiedensten Gebieten angewendet wird. Die Ultraschallsender/Empfänger sind hier piezoelektrische Schwingquarze, die mit einem Kondensator zur Bestimmung der Entladezeit direkt gekoppelt sind. Die Realisierung einer entsprechenden Steuerungselektronik, die den Entladevorgang startet und mit Empfang des Ultraschallimpulses stoppt und daraus nach einem der oben angeführten Verfahren die Laufzeit ermittelt ist dem Fachmann möglich. Der Vorteil bei einem solchen Gerät besteht darin, daß das neue Verfahren mit vorhandenen Geräten durchführbar ist, und nur die Steuerungs- und Auswerteelektronik an den Schwingquarzen modifiziert wird, wobei die Signale analog zur Verfügung stehen und in bekannter Weise in die Strömungsgeschwindigkeit bzw. die Molmasse umrechenbar sind, z. B. mit Hilfe von Operationsverstärkern.

Weitere Einzelheiten, Merkmale und Vorteile der Erfindung lassen sich nachfolgendem Beschreibungsteil entnehmen, in dem anhand von Zeichnungen ein Ausführungsbeispiel der Erfindung näher erläutert ist. Es zeigen:

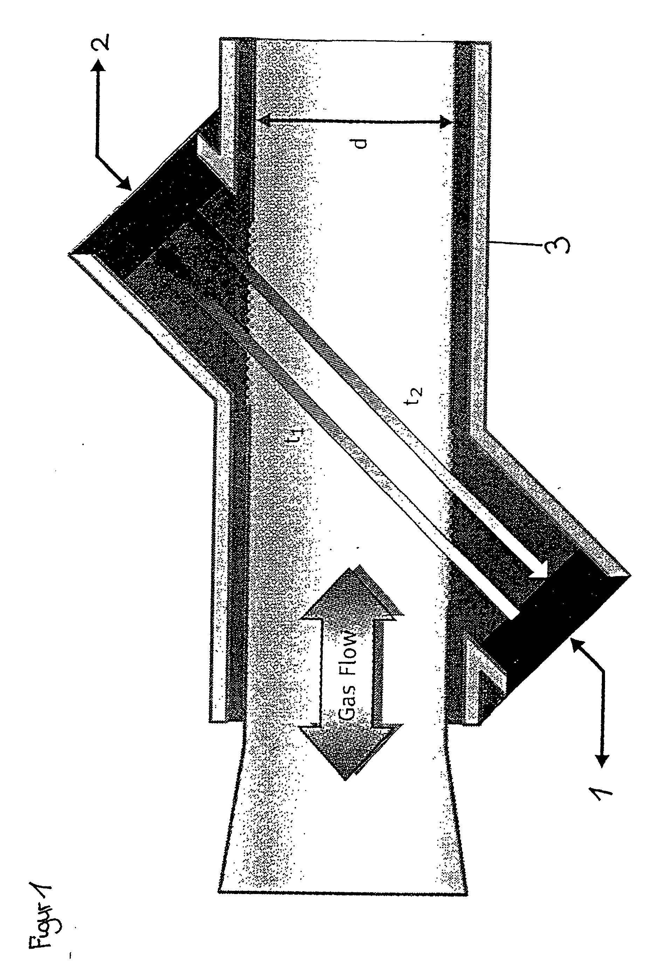

- **Figur 1**: den schematischen Aufbau eines Pneumotachografen,
- **Figur 2**: den zeitlichen Verlauf einer angelegten Spannung an einem Kondensator.

Der Durchmesser des Durchflußrohres (3) beträgt üblicherweise ca. 2-3 cm, so daß die Sender/Empfänger (1,2) ca. 5 cm voneinander entfernt sind und mit der Schallgeschwindigkeit in Luft von ca. 331 m/s die Laufzeit im ruhendem Medium von 150 Mikrosekunden erhalten wird. Bei der Atemmessung in der Medizin strömt die Luft mit einer Geschwindigkeit von 1 m/s bei ruhiger Atmung abwechselnd in beide Richtungen durch das Rohr (3), wie er mit dem Pfeil angedeutet ist. Der Aufbau ist prinzipiell derselbe wie bei bekannten Pneumotachographen, nur daß bei diesem Verfahren die Sender/Empfänger (1,2) mit Kondensatoren und einer speziellen Steuerelektronik versehen sind.

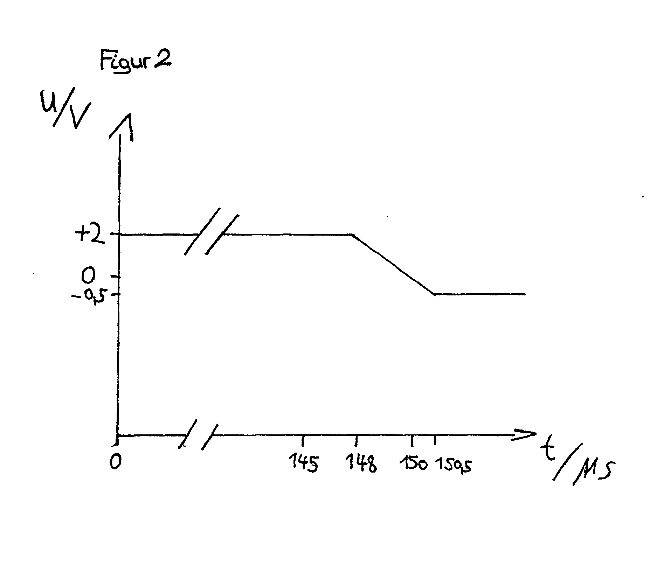

Bei dem in Figur 2 dargestellten Diagramm handelt es sich um die Entladungskurve des Kondensators, wobei die Abszisse in Volt und die Ordinate in Mikrosekunden geeicht ist. Zum Zeitpunkt t = 0, d. h. wenn im Sender ein Ultraschallimpuls abgestrahlt wird, beginnt eine vorher eingestellte Zeitspanne abzulaufen, in diesem Beispiel 148 Mikrosekunden. Sie wird mit einem Blindversuch im ruhenden Medium ermittelt und dann einige Mikrosekunden von dieser Zeit abgezogen, um nur in einem begrenzten Zeitfenster um diesen Wert herum eine Messung durchzuführen. Nach deren Ablauf beginnt die Entladung des Kondensators, der in diesem Beispiel mit einer angelegten Spannung von +2V aufgeladen wurde, mit einer konstanten Stromstärke. Die hierzu erforderliche Steuerelektronik ist dem Fachmann bekannt. Der Empfänger ist so mit dem Kondensator zusammengeschaltet, daß der Empfangsimpuls des Ultraschallsignals, in diesem Beispiel nach 150,5 Mikrosekunden, die Entladung des Kondensators bei einem Wert von - 0,5 V beendet. Aus dieser Spannung und der bekannten Entladestromstärke ist in einfacher Weise die Entladedauer zu berechnen. Diese wird von der elektronischen Schaltung zu der Zeitspanne addiert und die so erhaltene Laufzeit berechnet. Nachdem ein Ultraschallimpuls in entgegengesetzer Richtung ausgesandt wurde, wird die zweite Laufzeit errechnet. Aus diesen beiden Werten kann in bekannter Weise die Strömungsgeschwindigkeit oder die Molmasse des bewegten Gases errechnet werden.

## Patentansprüche

1. Verfahren zur Bestimmung der Strömungsgeschwindigkeit und/oder der Molmasse von flüssigen oder gasförmigen Medien in Durchflußmeßgeräten, insbesondere Pneumotachographen, mit Hilfe der Laufzeitmessung von Ultraschallimpulsen im Medium zwischen zwei Ultraschallsendern/Empfängern, insbesondere piezoelektrischen Sendern/Empfängern, **dadurch gekennzeichnet, daß**
- ein Ultraschallimpuls von einem Sender (1) abgestrahlt wird, und gleichzeitig der Ablauf einer Zeitspanne, die kürzer ist als die Laufzeit im ruhenden als auch im strömenden Medium, beginnt,
- nach dem Ende der Zeitspanne die Entladung eines Kondensators, an den eine Spannung angelegt ist, mit konstanter Stromstärke beginnt,
- mit der Registrierung des Ultraschallimpulses im Empfänger (2) die Entladung beendet wird,
- die noch am Kondensator anliegende Spannung gemessen und daraus die Entladedauer bestimmt wird,
- die Laufzeit aus Zeitspanne und Entladedauer addiert wird,
- die Laufzeitmessung in umgekehrter Richtung wiederholt wird,
- aus den unterschiedlichen Laufzeiten die Strömungsgeschwindigkeit und/oder die Molmasse bestimmt wird.

2. Verfahren nach Anspruch 1, **dadurch gekennzeichnet, daß** die Zeitspanne und/oder die am Kondensator anliegende Spannung und/oder der Entladestrom variierbar sind.

3. Verfahren nach Anspruch 1 oder 2, **dadurch gekennzeichnet, daß** der Laufzeit des Ultraschall-impulses im ruhenden Medium die am Kondensator anliegende Spannung 0V zugeordnet ist.

4. Verfahren nach einem der vorhergehenden An-sprüche, **dadurch gekennzeichnet, daß für eine kleine** Änderung der Schallgeschwindigkeit und/oder der Molmasse des Mediums die lineare Abhängigkeit von der kleinen Laufzeitänderung angenommen wird.

5. Verfahren nach einem der vorhergehenden Ansprüche, **dadurch gekennzeichnet, daß** die Bestimmung der Molmasse im ruhenden Medium durchgeführt wird.

6. Durchflußmeßgerät zur Durchführung des Verfahrens nach einem der vorhergehenden Ansprüche, wobei das Durchflußmeßgerät denselben apparativen Aufbau und dieselbe Funktionsweise hat wie bekannte Durchflußmeßgeräte, die mit der Laufzeitmessung von Ultraschallimpulsen arbeiten,
**dadurch gekennzeichnet, daß**
- beide Ultraschallsender/Empfänger mit einem Kondensator verbunden sind, der mit einer Spannung beaufschlagbar ist und mit einem konstanten Entladestrom entladen werden kann,
- die Ultraschallsender/Empfänger mit einer Steuerelektronik verbunden sind, die den Entladebeginn und das Entladeende des Kondensators steuert, und die Strömungsgeschwindigkeit und/oder die Molmasse mit einem der Verfahren ermittelt.

## Claims

1. Method for determining the flow rate and/or the molecular weight of liquid and/or gaseous media in flow measurement apparatuses, in particular pneumotachographs, by means of the transit time measurement of ultrasonic pulses in the medium between two ultrasonic tranmitters/receivers, in particular piezoelectric transmitters/receivers, **characterised in that**
- an ultrasonic pulse is emitted by a transmitter (1), and simultaneously there begins the elapse of a time interval, which is slightly shorter than the transit time in the stationary as well as in the flowing medium,
- after the end of the time interval, there begins the discharge of a capacitor, on which a voltage lies, with constant current intensity,
- with the registering of the ultrasonic pulse in the receiver (2), the discharge is ended,
- the voltage still present on the capacitor is measured and, from this, the discharge duration is determined,
- the transit time consisting of the time interval and discharge duration is added,
- the transit time measurement is repeated in the opposite direction,
- the flow rate and/or the molecular weight is determined from the different transit times.

2. Method according to claim 1, **characterised in that** the time interval and/or the voltage on the capacitor and/or the discharge current are variable.

3. Method according to claim 1 or 2, **characterised in that** the transit time of the ultrasonic pulse in the stationary medium is associated with the voltage 0V on the capacitor.

4. Method according to one of the preceding claims, **characterised in that**, for a small change of the flow rate and/or the molecular weight of the medium, linear dependency of the small transit time is assumed.

5. Method according to one of the preceding claims, **characterised in that** the determination of the molecular weight is carried out in the stationary medium.

6. Flow measurement apparatus for carrying out the method according to one of the preceding claims, **characterised in that**
- the flow measurement apparatus has the same construction and the same mode of operation as known flow measurement apparatuses that operate by means of the transit time measurement
- both ultrasonic transmitters/receivers are connected to a capacitor,. to which a voltage can be applied, and can be discharged with a constant discharge current,
- the ultrasonic transmitters/receivers are connected to control electronics, which control the discharge begin and discharge end of the capacitor, and determine the flow velocity and/or the molecular weight by means of one of the methods.

## Revendications

1. Procédé de détermination de la vitesse d'écoulement et/ou de la masse molaire de fluides liquides ou gazeux dans les . débitmètres, notamment dans les pneumotachographes, par mesure du temps de propagation des impulsions ultrasonores dans le fluide entre deux émetteurs/récepteurs d'ultrasons, notamment deux émetteurs/récepteurs piézoélectriques, **caractérisé en ce que**
- un émetteur (1) émet une impulsion ultrasonore tandis qu'un laps de temps légèrement inférieur au temps de propagation dans le fluide au repos, commence simultanément à s'écouler,
- une fois ce laps de temps écoulé, la décharge d'un condensateur auquel une tension est appliquée, commence avec un courant d'intensité constante,
- la décharge du condensateur s'arrête dès que le récepteur (2) enregistre l'impulsion ultrasonore,
- on mesure la tension encore appliquée au condensateur d'après laquelle on détermine la durée de décharge,
- on calcule le temps de propagation en additionnant le laps de temps et la durée de décharge,
- on répète la mesuré du temps de propagation dans le sens inverse,
- on détermine la vitesse d'écoulement et/ou la masse molaire à partir des différents temps de propagation obtenus.

2. Procédé selon la revendication 1, **caractérisé en ce que** le laps de temps et/ou la tension appliquée au condensateur et/ou le courant de décharge sont variables.

3. Procédé selon la revendication 1 ou 2, **caractérisé en ce que** le temps de propagation de l'impulsion ultrasonore dans le fluide au repos correspond à la tension 0 V appliquée au condensateur.

4. Procédé selon l'une des revendications précédentes, **caractérisé en ce que** l'on suppose qu'il existe une dépendance linéaire entre une légère modification de la vitesse d'écoule-ment ou de la masse molaire du fluide et une petite modification du temps de propagation.

5. Procédé selon l'une des revendications précédentes, **caractérisé en ce que** l'on détermine la masse molaire dans le fluide au repos.

6. Appareil de mesure du débit permettant d'exécuter le procédé suivant l'une des revendications précédentes, cet appareil étant conçu de manière analogue et fonctionnant d'après le même principe que les débitmètres connus, et mesurant le temps de propagation des impulsions ultrasonores, **caractérisé en ce que**
- les deux émetteurs/récepteurs sont reliés à un condensateur auquel on peut appliquer une tension et que l'on peut décharger avec un courant de décharge constant,
- les émetteurs/récepteurs d'impulsions sonores sont reliés à une commande électronique qui déclenche le début et la fin de la décharge du condensateur et calcule la vitesse d'écoulement et/ou la masse molaire suivant l'un des procédés.
